# EUROPÄISCHE PATENTSCHRIFT

(11) **EP 3 080 672 B1**
(45) Veröffentlichungstag und Bekanntmachung des Hinweises auf die Patenterteilung: **11.03.2020**
(21) Anmeldenummer: 14850096.0
(22) Anmeldetag: 09.12.2014
(51) Int. Cl.: G05D 1/02

(54) **FAHRERLOSES TRANSPORTFAHRZEUG FÜR DEN TRANSPORT SCHWERER LASTEN AUF LAFETTEN**
DRIVERLESS TRANSPORT VEHICLE FOR THE TRANSPORTATION OF HEAVY LOADS ON CARRIAGES
VÉHICULE DE TRANSPORT SANS CONDUCTEUR POUR LE TRANSPORT DE CHARGES LOURDES SUR DES CHÂSSIS

(30) Priorität: 12.12.2013 DE 102013020851
(43) Veröffentlichungstag der Anmeldung: 19.10.2016
(73) Patentinhaber: Grenzebach Maschinenbau GmbH, 86663 Asbach-Baeumenheim (DE)
(72) Erfinder: HERRE, Erwin, 86675 Buchdorf (DE); MECKLINGER, Sigfried, 86675 Buchdorf (DE); GEIGER, Rüdiger, 86682 Genderkingen (DE); VOGT, Bernd, 86405 Meitingen (DE)
(74) Vertreter: Kindermann, Peter
(86) Internationale Anmeldenummer: PCT/DE2014/000627
(87) Internationale Veröffentlichungsnummer: WO 2015/085985

(56) Entgegenhaltungen:
- EP-A1- 2 607 292
- EP-A2- 0 192 402
- WO-A1-2006/087542
- WO-A2-2006/044108
- CN-U- 202 294 611
- DE-A1- 10 229 036
- DE-A1-102008 042 315
- DE-A1-102010 062 549
- DE-U1-202013 007 279
- US-A- 5 999 866
- US-A1- 2008 166 217
- US-A1- 2013 177 379

## Beschreibung

Die Erfindung betrifft ein fahrerloses Transportfahrzeug für den Transport schwerer Lasten auf Lafetten.
In Produktions - und Distributionsbetrieben gibt es seit vielen Jahren die Forderung nach kurzen Durchlaufzeiten, geringen Beständen und hoher Flexibilität. Zur Erreichung dieser Ziele sind vielfältige organisatorische Maßnahmen und der Einsatz technischer Mittel erforderlich. Im Bereich der technisch operativen Logistik sind es die Prozesse und Betriebsmittel des innerbetrieblichen Materialflusses die geeignet gestaltet werden müssen. Ein wichtiger Prozess im Materialfluss ist das Transportieren, also die zielgerichtete Ortsveränderung, von Gütern. Ein Betriebsmittel, das hierzu wegen seiner universellen Verwendungsmöglichkeiten in vielen Unternehmen eingesetzt wird, ist der konventionelle Gabelstapler oder der Gabelhubwagen.
Den Transportprozess zu automatisieren ist durch die Einrichtung von fahrerlosen Transportsystemen gegeben.

Fahrerlose Transportsysteme sind innerbetriebliche Transportsysteme mit automatisch gesteuerten Fahrzeugen die dem Materialtransport dienen.

Zum Stand der Technik ist aus der DE 10 2007 002 242 A1 ein System, insbesondere ein fahrerloses Transportfahrzeug zum Transport von Lasten auf welligem Untergrund, insbesondere Boden, bekannt.
Dieses System soll ein bestehendes System, insbesondere ein fahrerloses Transportfahrzeug weiterbilden, wobei das System auf verschiedenen Untergründen gut verwendbar sein soll.
Dieses System umfasst zumindest einen Primärleiter und ein daraus berührungslos versorgbares Fahrzeug, welches eine mit dem Primärleiter induktiv gekoppelte Sekundärspule umfasst. Hierbei ist der Sekundärspule eine Kapazität derart zugeordnet, dass die zugehörige Resonanzfrequenz im Wesentlichen der Mittelfrequenz, insbesondere zwischen 10 und 100 kHz, des in den Primärleiter eingeprägten Stromes entspricht, wobei zwischen der Antriebseinheit, umfassend jeweils Antriebsrad und zugehörigen Antrieb, und dem Gestänge des Fahrzeugs ein Federmittel angeordnet ist.

Aus der den Oberbegriff des Patentanspruchs 1 bildenden Druckschrift WO 2006/044108 A2 ist ein fahrerloses Transportfahrzeug für den Transport von Lasten in der Form von beladenen, auf Lenkrollen bewegbaren, Lafetten bekannt, mit: einem Fahrzeuggehäuse mit einem mittleren Hubdorn, einem linken Hubdorn und einem rechten Hubdorn mit zwei, beidseitig in der Mitte des Fahrzeuggehäuses an jeweils einer gesondert gelagerten Drehachse separat von jeweils einem Antrieb angetriebenen Antriebsrädern, wobei an der Vorderseite und an der Hinterseite des Fahrzeuggehäuses jeweils paarweise Stützräder vorgesehen sind.

Aus der Druckschrift US 2008/0166217 A1 ist ein fahrerloses Transportfahrzeug für den Transport von Lasten bekannt, wobei ein Antriebsmotor eine Hubspindel derart antreibt, dass ein Andock-Kopf angehoben oder abgesenkt werden kann.

Die Druckschrift DE 20 2013 007279 U1 zeigt ein autarkes Transportfahrzeug für den schnellen Transport von Lastregalen auf einer unebenen Bodenfläche und insbesondere bei leichten Steigungen. Hierbei wird über ein zentral angeordnetes Stellelement, einen Hubdreh-Hebel, eine Schubstange und Hubstangen eine Trägerplatte zum Ausgleich der Steigung angehoben oder abgesenkt.

Aus der Druckschrift DE 10 2008 042 315 A1 ist eine Vorrichtung zum Ermitteln einer Gesamtmasse eines Kraftfahrzeugs bekannt, wobei ein Beschleunigungssensor die Beschleunigung eines Kraftfahrzeugs erfasst und daraus die Gesamtmasse des Kraftfahrzeugs ermittelt.

Weiterhin ist aus der Druckschrift WO 2006/087542 A1 eine Vorrichtung zur Bestimmung des Ortes eines autarken Fahrzeugs bekannt, wobei eine Kamera die Bodenstruktur erfasst, um ferner eine Fahrzeuggeschwindigkeit und in Verbindung mit einem Dreh-Mess-Sensor an einem jeweiligen Antriebsrad den jeweiligen Schlupf der Antriebsräder berechnet.

Schließlich offenbart die Druckschrift US 2013/177379 A1 eine Vorrichtung und ein Verfahren zum Betreiben eines fahrerlosen Transportfahrzeugs, wobei ein Hubdorn lediglich zum Ankoppeln des Transportfahrzeugs an eine Lafette vorgesehen ist.

Demgegenüber liegt der Erfindung die Aufgabe zugrunde, ein fahrerloses Transportfahrzeug für den Transport von sehr schweren Lasten zu schaffen, mit dem der schnelle Transport von Lastregalen mit Lasten bis über 1000kg in großen Werkshallen störungsfrei auch bei leichten Steigungen ausgeführt werden kann.

Erfindungsgemäß wird diese Aufgabe durch die kennzeichnenden Merkmale des neuen Patentanspruchs 1 gelöst.

Im Unteranspruch ist ein weiteres vorteilhaftes Ausführungsbeispiel der Erfindung gekennzeichnet.

Die erfindungsgemäße Vorrichtung wird im Folgenden näher beschrieben.
Es zeigen im Einzelnen:
- Fig. 1:: eine perspektivische Draufsicht auf ein Transportfahrzeug 4,
- Fig. 2:: einen Längsschnitt durch ein Transportfahrzeug 4,
- Fig. 2a:: einen Querschnitt aus dem Bereich des mittleren Hubdorns 10,
- Fig. 3:: einen Querschnitt durch ein Transportfahrzeug 4 im Andock-Bereich,
- Fig. 4:: einen Querschnitt des Andock-Bereichs bei erfolgter Verbindung,
- Fig. 5:: einen Querschnitt des Andock-Bereichs bei höherer Beladung,
- Fig. 6:: einen Querschnitt eines Transportfahrzeugs und einer Lafette.

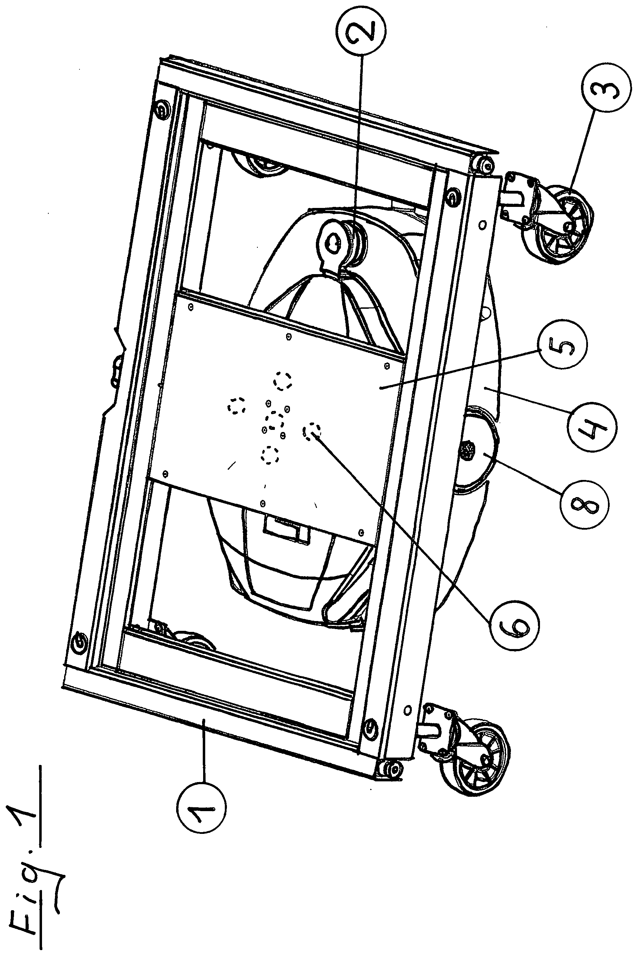

Die Fig.1 zeigt eine perspektivische Draufsicht auf ein Transportfahrzeug 4 mit einer aufliegenden Lafette 1. Die Lafette 1 ist im Bereich ihres Schwerpunkts mit einer rechteckigen Andock-Traverse 5 verbunden, die im Schnittpunkt ihrer Flächendiagonalen eine Bohrung aufweist die in Richtung der Längsseite dieses Rechtecks und in Richtung der Querseite jeweils zu beiden Seiten von einer weiteren Bohrung begleitet ist. Diese 5 Bohrungen bilden ein Kreuz, das als Andock-Kreuz 6 bezeichnet wird, da das Transportfahrzeug 1 Mittel aufweist mit denen über, in diese Bohrungen gleitende, Zapfen in der Form von drei Hubdornen eine kraftschlüssige Verbindung zur Lafette 1 als Andockung hergestellt wird. Die Mittelpunkte dieser drei Hubdorne, eines linken, eines mittleren und eines rechten, liegen auf einer Linie wobei der mittlere Hubdorn die Bohrung im Schnittpunkt der Flächendiagonalen der Andock-Traverse 5 durchdringt. Da die 5 beschriebenen Bohrungen den drei Hubdornen eine Andockung in zwei, aufeinander senkrecht stehenden, Richtungen erlauben, ist das Transportfahrzeug 4 in der Lage eine Lafette 1 in Längsrichtung oder in Querrichtung aufzunehmen. An der oberen Vorderseite des gezeigten Transportfahrzeugs 4 ist ein, der Orientierung dienender, Laser-Scanner mit 2 bezeichnet. Das, hier sichtbare, rechte Antriebsrad des Transportfahrzeugs 4 trägt die Bezeichnung 8 und die Lenkrollen der Lafette 1 sind mit 3 bezeichnet.

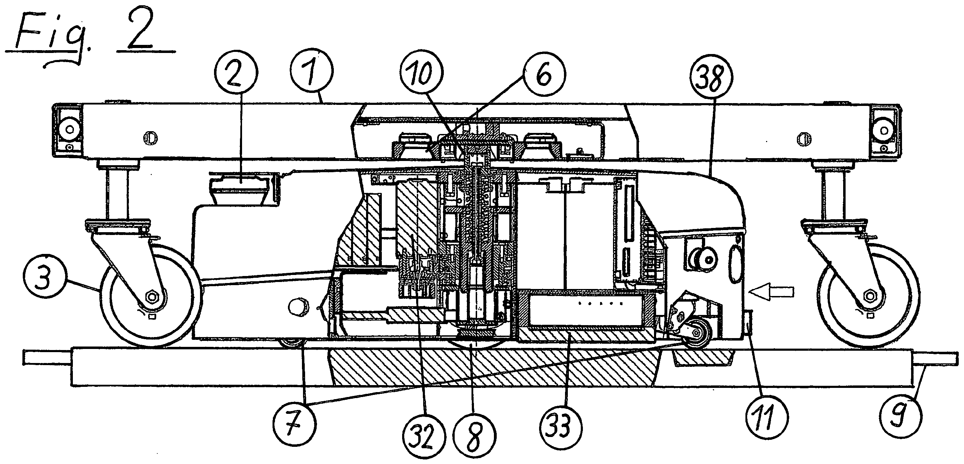

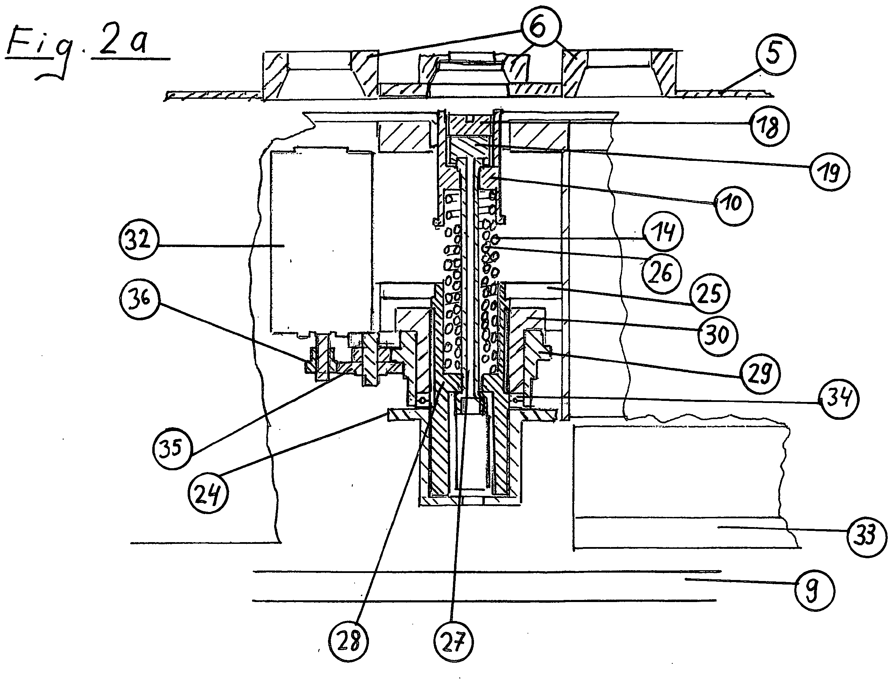

Die Fig.2 zeigt einen Längsschnitt durch ein Transportfahrzeug mit einem Fahrzeuggehäuse 38 im Verbund mit einer Lafette 1. In dieser Darstellung sind an der Lafette 1 eine vordere und eine hintere Lenkrolle 3 zu erkennen. Weiter sind an der Unterseite des Transportfahrzeugs das rechte Antriebsrad 8 und jeweils ein Stützrad 7 dargestellt, wobei das hintere Stützrad 7 keine Verkleidung aufweist. An der Unterseite des Transportfahrzeugs ist ein Induktions-Stromabnehmer 33 verbaut der in Verbindung mit einer, im Boden verlegten, Induktions-Leitung 9 für die Stromversorgung des Transportfahrzeugs sorgt. An der Vorderseite des Transportfahrzeugs ist ein Laser-Scanner 2 zu erkennen, der durch weitere Laser -Scanner ergänzt werden kann.
An der Rückseite des Fahrzeuggehäuses 38 ist eine Kamera 11 zur Erfassung der Bodenstruktur installiert. Kameras zur Spurführung und sicherheitsrelevante Ultraschallsensoren sind in dieser Fig.2 nicht dargestellt.
Der, zeichnerisch aufgeschnittene, mittlere Teil des Transportfahrzeugs zeigt den Bereich um einen Hubdorn 10 und einen Antriebsmotor 32 für eine Hubspindel 28. die später noch näher beschrieben wird. Weiter ist in diesem aufgeschnittenen Teil im Bereich der Lafette 1 das Andock-Kreuz 6 gekennzeichnet.

Die Fig.2a zeigt einen Querschnitt aus dem Bereich des mittleren Hubdorns 10.
Hier ist zur Verdeutlichung der zentrale Hebemechanismus des Transportfahrzeugs, befreit von allen störenden Abdeckungen, gesondert herausgezeichnet. Im oberen Teil dieser Figur ist die, zum Transportfahrzeug korrespondierende Andock-Traverse 5 mit dem Andock-Kreuz 6 der Lafette dargestellt. Der Kontakt zwischen dem Transportfahrzeug und der Andock-Traverse 5 der Lafette wird hier mittels des vertikalen Hochdrückens des mittleren Hubdorns 10 gezeigt.
Der Hubdorn 10 sitzt auf dem oberen Teil einer äußeren Druckfeder 14 auf, die eine innere Druckfeder 26 konzentrisch umgibt, wobei beide Druckfedern 14 und 26 von einem, in ihrer Längsachse verlaufenden, Führungsrohr 27 geführt werden. Dieses Führungsrohr 27 verbreitet sich an seiner oberen Seite zu einer runden Kontaktplatte 19, die an eine Kontaktplatte 18 der Lafette angrenzt, und ist im Hubdorn 10 verschiebbar gelagert. An der unteren Seite verbreitert sich dieses Führungsrohr 27 zu einer runden, nicht näher bezeichneten, Kontaktplatte, die eine Aufwärtsbewegung des Führungsrohrs 27 an einer Arretierung einer, später beschriebenen, Hubspindel 28 begrenzt.
Die Hubspindel 28 ist ein zylinderförmiges Bauteil das, vertikal gelagert, im oberen Bereich in einer vertikalen konzentrischen Aussparung die Lagerung der, ineinander um das Führungsrohr 27 sich bewegenden, äußeren Druckfeder 14 und inneren Druckfeder 26 darstellt.
Konzentrisch um ein, auf der ganzen Länge der Hubspindel 28 eingefrästes, Außengewinde ist eine, in dieses Außengewinde eingreifende, Spindelmutter 30 angeordnet, die mittels eines, ebenfalls um die Hubspindel 28 konzentrisch gelagertes, Zahnrad 29 über einen Anschlag an der Spindelmutter 30 in diesem Außengewinde vertikal nach oben bewegt werden kann.
Der Antrieb des Zahnrads 29 erfolgt mittels eines Antriebsmotors 32, dessen Antriebsritzel 36 über Untersetzungs-Zahnräder 35 mit dem Zahnrad 29 in Eingriff steht. Die vertikale Bewegung der Spindelmutter 30 findet am unteren Ende in einem Drucklager 34 ihres Gehäuses 24 ihre Begrenzung.
Die Spindelmutter 30 findet in ihrer vertikalen Aufwärtsbewegung einen Anschlag an der oberen Platte des Gehäuses 24. Durch Drehung der Spindelmutter 30, erfolgt die Vertikalbewegung der Hubspindel 28 mit der Druckplatte 25. Die Druckplatte 25 dient der Aufwärtsbewegung des linken und des rechten Hubdorns in Richtung der Andock-Traverse. Die Aufwärtsbewegung des Hubdorns 10 erfolgt über die Hubspindel 28 mit der Druckfeder 14 die auf den Hubdorn 10 drückt und in ihrer Länge durch das Führungsrohr 27 begrenzt wird.

Durch entgegen gesetztes Drehen der Spindelmutter 30 erfolgt die Abwärtsbewegung der Hubspindel 28 mit der Druckplatte 25 und den Außenhubdornen 15 und 13. Durch weiteres Absenken der Hubspindel 28 stößt die untere Begrenzung des Führungsrohrs 27 an eine, im Inneren der Hubspindel 28 vorgesehene, ringförmige Arretierung.
Dadurch wird die Druckfeder 14 begrenzt und der Hubdorn 10 erfährt durch weiteres Absenken der Hubspindel 28 eine Abwärtsbewegung. Somit löst sich der Hubdorn 10 als letzter der Hubdorne von der Andock-Traverse 5. (Sicherheit bei Nothalt).

Durch den Einsatz der beiden Druckfedern 14 und 26 ist es möglich den Druck mit dem der mittlere Hubdorn 10 die Lafette unterstützt variabel zu gestalten. So kann zum Beispiel die Kraft die über die äußere Druckfeder auf die Andock-Traverse, und damit auf die Lafette, ausgeübt wird von Null bis 3923 N (400 kp) Ladungslast variiert werden. Wird der Druck weiter erhöht, kommt die innere Druckfeder zum Einsatz, die eine Veränderung der Druckkraft von zum Beispiel 3923 N (400 kp) bis 9807 N (1000 kp) Ladungslast zulässt. Auf diese Weise kann der Anteil der Last auf der zu transportierenden Lafette der auf den Antriebsrädern des Transportfahrzeugs lastet, den jeweiligen Gegebenheiten des Bodens angepasst werden. Denn auf diese Weise kann nicht nur die Antriebsleistung des Transportfahrzeugs an die insgesamt zu transportierende Last sondern auch an die Bodenverhältnisse und die Belastbarkeit der Antriebsräder angepasst werden.
Diese Maßnahmen haben einen erheblichen Einfluss auf das Bremsverhalten des beladenen Transportfahrzeugs. Mit dem beschriebenen System können Steigungen oder Gefälle der Bodenfläche von bis zu 5% überwunden werden.
Die Induktions-Leitung 9 und der zugehörige Induktions-Stromabnehmer 33 sind aus der Fig.2 bekannt.

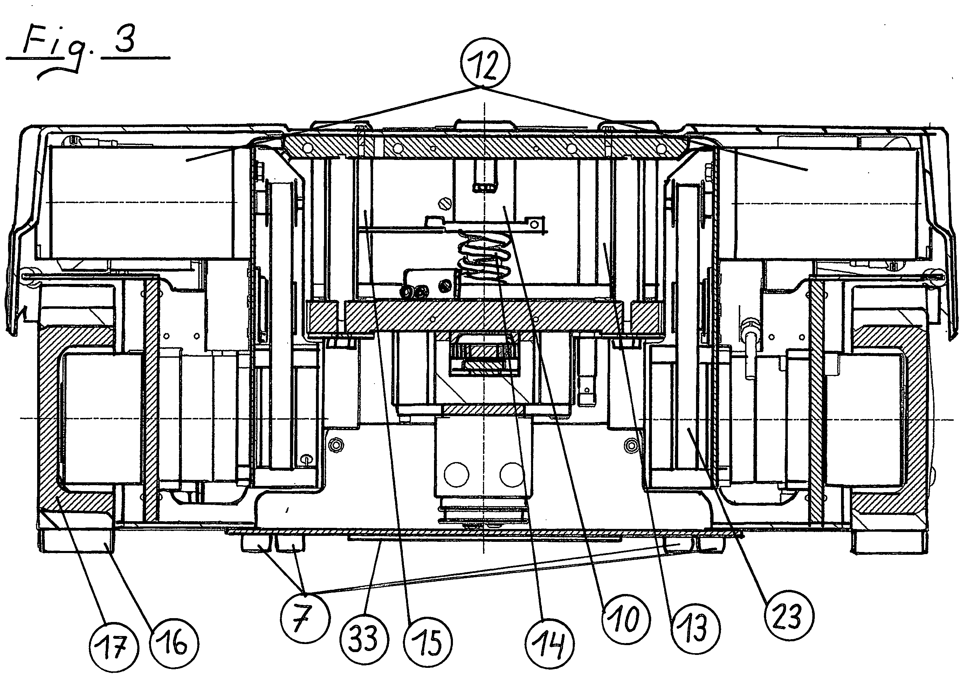

Die Fig.3 zeigt einen Querschnitt durch ein Transportfahrzeug 4 im Andock-Bereich. In dieser Darstellung sind im oberen Bereich des Transportfahrzeugs auf der linken und auf der rechten Seite jeweils der Antrieb 12 für ein Antriebsrad gezeigt, von dem auf der linken Seite die Antriebsrad-Felge 17 und der Antriebsrad-Reifen 16 zu erkennen sind. Der Antrieb der beiden Antriebsräder erfolgt jeweils mittels eines Zahnriemens 23 der von dem Antrieb 12 zur Radachse des jeweiligen Antriebsrads führt. An der Unterseite des gezeigten Transportfahrzeugs sind links und rechts von der Mitte jeweils ein Paar Stützräder 7 zu sehen. In diesem Bereich ist auch wieder der Induktions-Stromaufnehmer 33 zu erkennen.
In der Mitte des Transportfahrzeugs ist in dieser Fig.3 der mittlere Hubdorn 10 mit der ihn bewegenden äußeren Druckfeder 14 und links und rechts davon der linke Hubdorn 15 und der rechte Hubdorn 13 im Querschnitt zu erkennen.

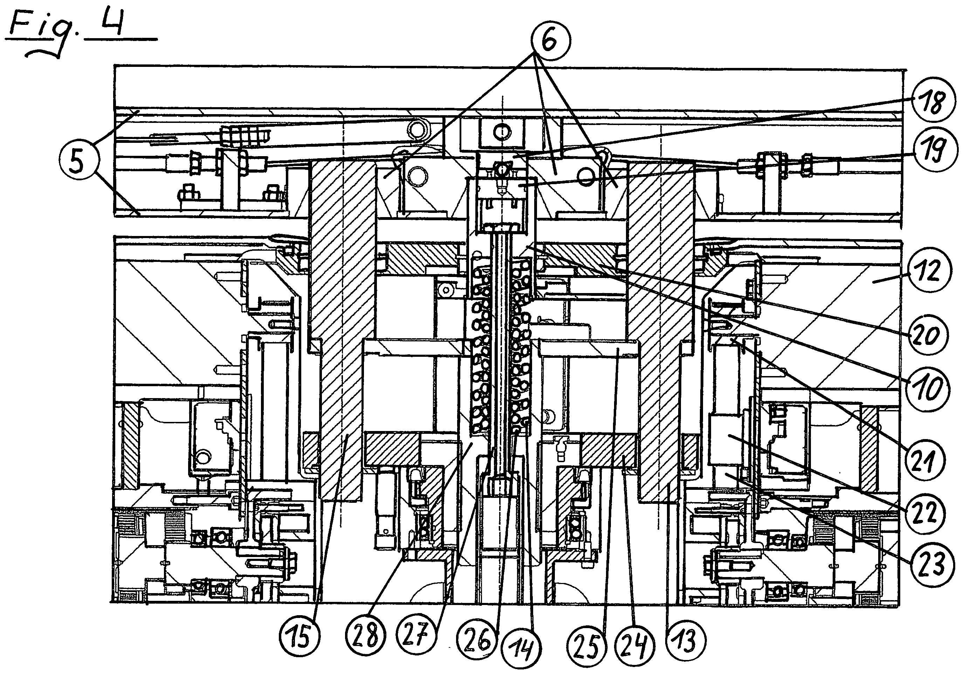

Die Fig.4 zeigt einen Querschnitt des Andock-Bereichs bei erfolgter Verbindung des Transportfahrzeugs mit einer Lafette.
In dieser Darstellung sind links und rechts von der Mitte mit dem mittleren Hubdorn 10, dem Führungsrohr 27 und der um das Führungsrohr 27 gelagerten inneren Druckfeder 26 und der äußeren Druckfeder 14, der linke Hubdorn 15 und der rechte Hubdorn 13 zu sehen. Außerdem sind hier die Hubspindel 28 mit ihrem Gehäuse 24 und die Druckplatte 25 für den linken und den rechten Hubdorn deutlich zu erkennen.
Die Stellung des linken und des rechten Hubdorns entspricht einer unbeladenen Lafette. Es ist lediglich die äußere Druckfeder 14 belastet und deshalb ist der Abstand der Druckplatte 25 zu dem Gehäuse 24 relativ klein.
Während die Gewichtskraft einer leeren Lafette 1 etwa 785 N (80 kp) beträgt, beträgt die Kraft des Hubdorns 10 etwa 392 N (40 kp) auf die Lafette. Dieser Druckkraft wird bis zu einer Beladung von etwa 3923 N (400 kp) auf der Lafette beibehalten.
Bei einer Beladung der Lafette zwischen 3923 N (400 kp) bis zu etwa 9807 N (1000 kp) beträgt die Druckkraft des Hubdorns 10 auf die Lafette etwa 1961 N (200 kp). Auf diese Weise wird das Anheben der leeren Lafette vermieden und das Durchdrehen der Antriebsräder 8 beim Anfahren und beim Bremsen der beladenen Lafette verhindert.
Der Führung dieser beiden Hubdorne dient die Führungsplatte 20. Auf der rechten Seite der Fig.4 sind der Antrieb 12 für das rechte Antriebsrad mit seinem Antriebsrad 21, dem Zahnriemen 23 und der Führungs- und Spannrolle 22 bezeichnet.
Im oberen Bereich der Fig.4 ist die Verbindung des mittleren Hubdorns 10 und der beiden anderen Hubdorne 15 und 13 mit der Andock-Traverse 5 und ihren Öffnungen des Andock-Kreuzes 6 gezeigt. Der mittlere Hubdorn 10 ist über die Kontaktplatte 19 und die Kontaktplatte 18 mit der Lafette verbunden.

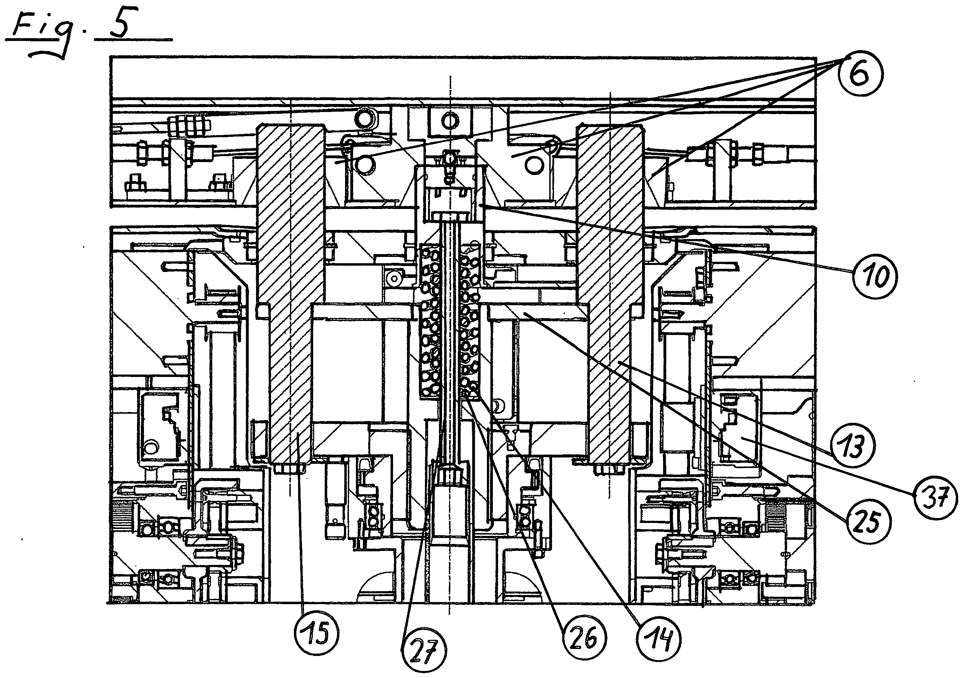

Die Fig.5 zeigt einen Querschnitt des Andock-Bereichs nach der Fig.4 in einer Stellung die einer Belastung der Lafette zwischen 3923 N (400 kp) und etwa 9807 N (1000 kp) entspricht. Auch hier sind die Hubdorne 10, 15 und 13, die Druckplatte 25, das Führungsrohr 27 und das Andock-Kreuz 6 zu erkennen.
Es sind hier die äußere Druckfeder 14 und die innere Druckfeder 26 belastet und deshalb ist der Abstand der Druckplatte 25 zu dem Gehäuse für die Hubspindel größer als in der Darstellung der Fig.4.
Im Bereich des rechten Antriebsrads ist hier zusätzlich ein Dreh-Mess-Sensor 37 dieses Antriebsrads bezeichnet.

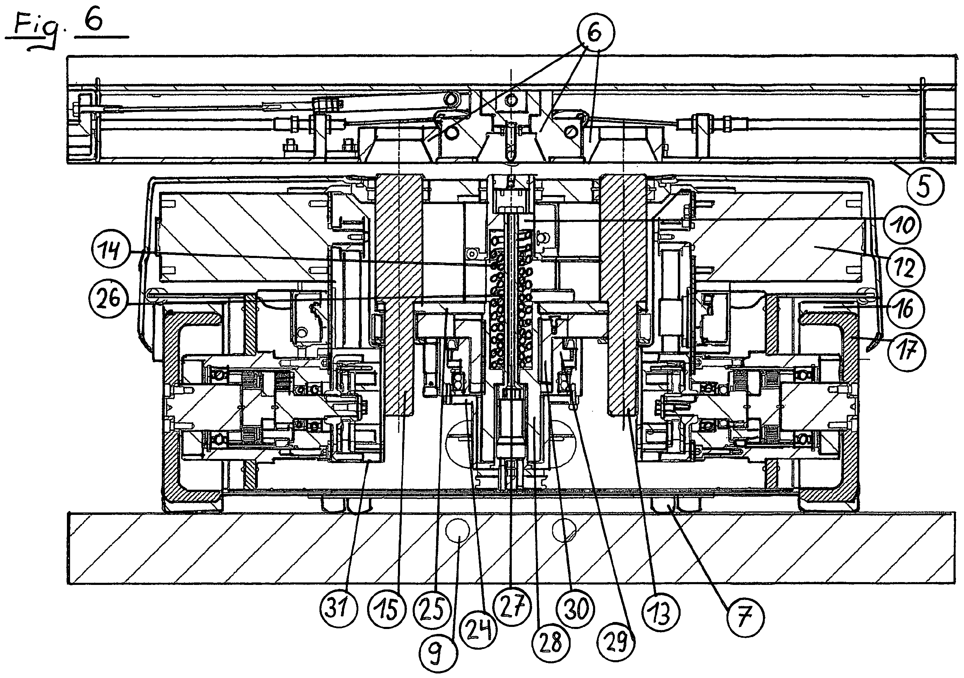

Die Fig.6 zeigt einen Querschnitt eines Transportfahrzeugs auf dem Boden und einer darüber angeordneten Lafette, insbesondere die Zuordnung der Verbindungselemente zwischen dem Transportfahrzeug und der Lafette.
In der Mitte ist hier wieder der mittlere Hubdorn 10 mit der äußeren Druckfeder 14, der inneren Druckfeder 26 und dem konzentrisch zur Längsachse dieser beiden Federn verlaufende Führungsrohr 27 zu sehen. Das Zahnrad 29 treibt die Spindelmutter 30 die durch ihr Innengewinde die Hubspindel 28 in ihrem Gehäuse 24 vertikal bewegen lässt und mittels der Druckplatte 25 den linken Hubdorn 15 und den rechten Hubdorn 13 zum Eingriff in die darüber liegenden Öffnungen des Andock-Kreuzes 6 in der Andock-Traverse 5 drücken kann.
Am rechten Antriebsrad sind die Antriebsrad - Felge 17 und der Antriebsrad-Reifen 16 mit dem Antrieb 12 bezeichnet. Im Boden sind zwei Induktions-Leitungen 9 dargestellt und am Boden sind die Stützräder 7 bezeichnet. Im Bereich des linken Antriebsrads ist ein Zahnriemenrad 31 für den Antrieb dieses Antriebsrads zu sehen. Allgemein ist zu dem beschriebenen Transportfahrzeug folgendes zu sagen:
Die Installation einer Kamera 11 zur Erfassung der Bodenstruktur am Fahrzeuggehäuse 38 dient der Ermittlung der Geschwindigkeit des Transportfahrzeugs und ermöglicht in Verbindung mit einem Dreh-Mess-Sensor 37 an jedem Antriebsrad 8 die Berechnung des Schlupfs an jedem Antriebsrad 8.

In einer besonderen Ausgestaltung enthält das Fahrzeuggehäuse 38 einen Sensor, der in den Figuren nicht bezeichnet ist, zur Messung der Beschleunigung.
Dieser Sensor ermöglicht bei einer zweckdienlichen, kurzen und zeitlich begrenzten, Beschleunigung aus dem Stand die Messung der Beschleunigung, und lässt so, unter Berücksichtigung bestimmter Parameter, Rückschlüsse auf die beschleunigte Masse zu. Hieraus kann dann das Gewicht der Beladung der Lafette ermittelt werden.

Die Kenntnis des Gewichts der Beladung der Lafette ist unter anderem wichtig zur Beurteilung des Schlupfes der Antriebsräder und, in Verbindung mit den Ermittlungen der Kamera 11 zur Erfassung der Bodenstruktur zur Auswahl der Antriebsrad-Reifen. Weiter dient die Kenntnis des Gewichts der Beladung der Lafette zur Abschätzung der notwendigen Antriebsleistung für den Transport einer beladenen Lafette.

Die Steuerung der komplexen Bewegungsvorgänge und die Signalverarbeitung der verwendeten Sensoren erfordern ein spezielles Steuerungsprogramm.

### Bezuqszeichenliste

- 1: Lafette
- 2: Laser - Scanner
- 3: Lenkrolle
- 4: Transportfahrzeug
- 5: Andock - Traverse
- 6: Andock - Kreuz
- 7: Stützrad
- 8: Antriebsrad
- 9: Induktions - Leitung
- 10: mittlerer Hubdorn
- 11: Kamera zur Erfassung der Bodenstruktur
- 12: Antrieb für ein Antriebsrad
- 13: rechter Hubdorn
- 14: äußere Druckfeder
- 15: linker Hubdorn
- 16: Antriebsrad - Reifen
- 17: Antriebsrad - Felge
- 18: Kontaktplatte der Lafette
- 19: Kontaktplatte Hubdorn
- 20: Führungplatte für den linken und rechten Hubdorn
- 21: Antriebsrad für den Zahnriemen 23
- 22: Führungs - und Spannrolle für den Zahnriemen 23
- 23: Zahnriemen
- 24: Gehäuse für die Hubspindel 28
- 25: Druckplatte für den linken und rechten Hubdorn
- 26: innere Druckfeder
- 27: Führungsrohr für die innere 26 und die äußere Druckfeder 14
- 28: Hubspindel
- 29: Zahnrad zum Antrieb der Spindelmutter 30
- 30: Spindelmutter
- 31: Zahnriemenrad für den Antrieb eines Antriebsrads
- 32: Antriebsmotor für Hubspindel 28
- 33: Induktions - Stromabnehmer
- 34: Drucklager der Spindelmutter 39
- 35: Untersetzungs - Zahnräder
- 36: Antriebsritzel
- 37: Dreh - Mess - Sensor eines Antriebsrads 8
- 38: Fahrzeuggehäuse

## Patentansprüche

1. Fahrerloses Transportfahrzeug für den Transport schwerer Lasten in der Form von beladenen, auf Lenkrollen bewegbaren, Lafetten mit den folgenden Merkmalen:
a) einem Fahrzeuggehäuse (38) mit einem mittleren Hubdorn (10), einem linken Hubdorn (15) und einem rechten Hubdorn (13) mit zwei, beidseitig in der Mitte des Fahrzeuggehäuses (38) an jeweils einer gesondert gelagerten Drehachse separat von jeweils einem Antrieb (12) angetriebenen Antriebsrädern (8), wobei an der Vorderseite und an der Hinterseite des Fahrzeuggehäuses (38) jeweils paarweise Stützräder (7) vorgesehen sind, wobei
b) die Hubdorne (10, 13, 15) zum Aufnehmen und Transportieren einer Lafette (1) mittels einer, in der Lafette (1) integrierten Andock-Traverse (5) ausgebildet sind,
c) eine Kamera (11) zur Erfassung der Bodenstruktur der Ermittlung der Geschwindigkeit des Transportfahrzeugs (4) dient und in Verbindung mit einem Dreh-Mess-Sensor (37) an jedem Antriebsrad (8) die Berechnung des Schlupfs an jedem Antriebsrad (8) ermöglicht,
d) ein Antriebsmotor (32) zum Antrieb einer Hubspindel (28) vorgesehen ist,
e) ein System zur Energieversorgung des Transportfahrzeugs (4) über induktive, im Boden verlegte Leitungen mittels eines Induktions-Stromabnehmers (33) an der Unterseite des Transportfahrzeuges (4) vorgesehen ist; **dadurch gekennzeichnet, dass**
die Hubspindel (28) mittels einer äußeren Druckfeder (14), einer inneren Druckfeder (26) und einem Führungsrohr (27) den mittleren Hubdorn (10) in eine zentrale Öffnung und mittels einer Druckplatte (25) den linken Hubdorn (15) und den rechten Hubdorn (13) in weitere Öffnungen der Andock-Traverse (5) drückt, wobei mittels der äußeren Druckfeder (14) die Kraft auf die Lafette von 0 bis 3923 N und bei dem Einsatz der inneren Druckfeder (26) von 3923 N bis 9807 N variiert werden kann.

2. Transportfahrzeug nach Anspruch 1, **dadurch gekennzeichnet,**
**dass** ein Sensor vorgesehen ist, der die Messung der Beschleunigung des mit einer Lafette beladenen Transportfahrzeugs (4) ermöglicht, um so Rückschlüsse auf die Ladung der Lafette zu ziehen.

## Claims

1. Driverless transport vehicle for the transportation of heavy loads in the form of laden carriages that are movable on casters, having the following features:
a) a vehicle housing (38) having a central lifting pin (10), a left lifting pin (15) and a right lifting pin (13), having two drive wheels (8) which are separately driven by in each case one drive (12) on either side in the centre of the vehicle housing (38) on a rotating axle that is in each case mounted separately, wherein support wheels (7) are provided in each case in pairs on the front side and on the rear side of the vehicle housing (38); wherein
b) the lifting pins (10, 13, 15) are configured for receiving and transporting a carriage (1) by means of a docking cross member (5) integrated in the carriage (1);
c) a camera (11) for detecting the ground structure serves for determining the speed of the transport vehicle (4) and, in conjunction with a rotation-measuring sensor (37) on each drive wheel (8), enables the slippage to be calculated on each drive wheel (8);
d) a drive motor (32) for driving a lifting spindle (28) is provided;
e) a system for supplying energy to the transport vehicle (4) by way of inductive lines installed in the ground and by means of an inductive current collector (33) on the lower side of the transport vehicle (4) is provided; **characterized in that**
the lifting spindle (28) by means of an outer compression spring (14), an inner compression spring (26), and a guide tube (27) pushes the central lifting pin (10) into a central opening and by means of a compression plate (25) pushes the left lifting pin (15) and the right lifting pin (13) into further openings of the docking cross member (5), wherein the force on the carriage by means of the outer compression spring (14) can be varied from 0 to 3923 N, and when using the inner compression spring (26) can be varied from 3923 N to 9807 N.

2. Transport vehicle according to Claim 1, **characterized in that** a sensor which enables the acceleration of the transport vehicle (4) laden with a carriage to be measured is provided, so as to draw conclusions pertaining to the load of the carriage.

## Revendications

1. Véhicule de transport sans conducteur pour le transport de charges lourdes sous la forme de remorques de lancement chargées pouvant être déplacées sur des rouleaux de guidage, avec les caractéristiques suivantes :
a) une carrosserie de véhicule (38) avec un mandrin de levage (10) central, un mandrin de levage (15) gauche et un mandrin de levage (13) droit avec deux roues motrices (8) qui sont entraînées séparément par respectivement un entraînement (12) de chaque côté au centre de la carrosserie de véhicule (38) au niveau d'un axe de rotation respectivement disposé de façon séparée, des roues de soutien (7) étant respectivement prévues par paire au niveau du côté avant et au niveau du côté arrière de la carrosserie de véhicule (38) ;
b) les mandrins de levage (10, 13, 15) étant réalisés pour recevoir et transporter une remorque de lancement (1) à l'aide d'une traverse d'amarrage (5) intégrée dans la remorque de lancement (1) ;
c) une caméra (11) servant à déterminer la structure du sol et à calculer la vitesse du véhicule de transport (4) et à calculer le patinage au niveau de chaque roue motrice (8) en liaison avec un capteur de mesure de rotation (37) au niveau de chaque roue motrice (8) ;
d) un moteur d'entraînement (32) étant prévu pour l'entraînement d'un arbre de levage (28) ;
e) un système d'alimentation en énergie du véhicule de transport (4) via des câbles inductifs placés dans le plancher à l'aide d'un récepteur de courant à induction (33) prévu au niveau du côté inférieur du véhicule de transport (4) ;
**caractérisé en ce que** :
l'arbre de levage (28) comprime le mandrin de levage central (10) dans une ouverture centrale à l'aide d'un ressort de pression extérieur (14), d'un ressort de pression intérieur (26) et d'un tube de guidage (27) et comprime le mandrin de levage (15) gauche et le mandrin de levage (13) droit dans des ouvertures supplémentaires de la traverse d'amarrage (5) à l'aide d'une plaque de pression (25), la force appliquée sur la remorque de lancement pouvant varier de 0 à 3923 N à l'aide du ressort de pression (14) extérieur et en cas d'utilisation du ressort de pression (26) intérieur, de 3923 N à 9807 N.

2. Véhicule de transport selon la revendication 1, **caractérisé en ce qu'**un capteur est prévu, celui-ci permettant de mesurer l'accélération du véhicule de transport (4) pour ainsi en déduire la charge de la remorque de lancement.
